# EUROPEAN PATENT SPECIFICATION

(11) **EP 0 715 741 B1**
(45) Date of publication and mention of the grant of the patent: **02.02.2000**
(21) Application number: 93919502.0
(22) Date of filing: 03.09.1993
(51) Int. Cl.: G06F 17/60

(54) **PRODUCT ASSEMBLY SYSTEM**
SYSTEM ZUR MONTAGE VON PRODUKTEN
SYSTEME DE REALISATION DE PRODUITS

(43) Date of publication of application: 12.06.1996
(73) Proprietor: COMPLIANCE (UK) LIMITED, Northampton NN4 7JJ (GB)
(72) Inventor: CURNOW, Raymond, Charles, Norwich, Norfolk NR2 3EH (GB)
(74) Representative: Flynn, Michael Joseph
(86) International application number: GB9301866
(87) International publication number: WO9506915

(56) References cited:
- EP-A- 0 520 927
- WO-A-91/00576
- WO-A-93/06555
- GB-A- 2 264 797
- US-A- 5 241 464
- INTERNATIONAL JOURNAL OF PRODUCTION RESEARCH. vol. 25, no. 11 , November 1987 , UK pages 1645 - 1658 E.A. VAN VEEN & J.C. WORTMANN 'Generic bills of material in assemble-to-order manufacturing'

## Description

### Field of the Invention

This invention relates to a method of compiling a product specification and to a product assembly system.

### Background of the Invention

Nearly all specifications of man-made objects are available in a wide variety, i.e. they include the choice of different features or options. Examples are the specification of an automobile where variety of the basic model can include the compulsory presence or absence of features according to the country of registration, as well as features such an alternative engines, automatic versus manual gearbox, colour and nature of the upholstery and other trim, body colour and a number of optional accessories. Another example is the specification of an insurance contract for commercial premises, where cover may be required for any goods, stock, raw material, work in progress, cash, building fabric and contents to guard against a choice of risks to various degrees of protection.

It is in the nature of such variety that the designer(s) of a family of car models, or indeed the designer(s) of the rules and regulations governing the pattern of an insurance contract which a given insurer will permit, builds into his kit of parts sufficient variety that many foreseeable combinations of market requirements are catered for. Yet it is also true that all possible combinations of variety are not available. For instance, some options come as alternatives to each other - it is usually a case of either an automatic gearbox or a manual gearbox, covering goods-in-transit risk or not. Yet other options are truly optional, for example the listing of specific items of high value for which full replacement value might be required but which fall in predefined categories e.g. jewelry, pictures, coin or stamp collections, and, in the case of an automobile, additional fog lights or decals or choice of in-car entertainment. Sometimes options are truly optional but restricted to a maximum number of options within a class, for example extra instruments to fit on a necessarily restricted dashboard, or a maximum number of a very high value items listed without incurring an individually negotiated premium. Variety, after all, is a means of offering customer choice but without the expense of individual negotiation and costing in each case.

When a specification has been agreed by, say, a main dealer in the case of an automobile, or by an insurance consultant in the case of insurance, that specification has to be used to produce, in the case of an automobile, a bill of materials (structured list of parts) for the assembly line, and, in the case of an insurance contract, a contract policy consisting of the paragraphs of text and premium calculations appropriate to that particular specification. In both cases, the parts or paragraph appropriate to one particular feature of the specification may be totally independent of any other feature of the specification, but in other cases particular paragraphs or parts may be conditioned by having to take into account combinations of the features specified. Examples in the case of an automobile might be an additional fog light as opposed to the parts dictated by both automatic gearbox and a more powerful engine having been chosen. In the case of an insurance contract, the nature of the business might dictate a special sub-clause if perishable goods in transit were also insured, for example.

The order in which the features/aspects/options of a specification are described is not relevant - it is the whole set of such descriptors which makes up a specification. However, the order in which features are presented for choice by a client is often dictated by convention or usual practice. Thus in the case of a complicated manufactured product, it would be natural for the design engineer(s) to consider the major variations first, then less major and finally the more minor variations. That degree of major-to-minor is not, however, necessarily correlated with the resultant complexity of components to be associated with each variant. In the case of an insurance contract, each major insurer has developed over the years familiar sequences of opening up the options by groups of options and successions of groups, as well as proffering more detailed sub-options when a more major option has been chosen.

It is this complexity of options structure, which rarely conforms to what is known mathematically as a tree structure, which has bedeviled the derivation of a highly specialised computer package for capturing option structure and hence specification choice. The problem is not mathematically trivial, being difficult to specify in the appropriate branch of mathematics known as propositional logic. Any fixed structure of options can be represented in a wide variety of approaches to capturing the logical connections, but in the two applications areas of manufactured product and insurance contracts represented above, and in many other applications, there is often a need in time to modify the logical connections and to introduce new options with their own logical connections. Such updating and maintenance can tax the effort required unless the original design has been conceived with that maintenance and updating requirement in mind. Yet again, a common problem in both the application areas designated, and others, is the need to maintain dated versions of both the options structure and the database containing "parts" appropriate to each dated version of the option structure. This is a particularly strong requirement for manufactured products given the necessity to recreate a true bill of material for each serially numbered product variant, and is increasingly recognised as a complete traceability requirement of all products and services under ISO 9000.

A product assembly system that does not allow the product options available to be selected in any order is known of from PCT/GB 90/00969, over which the present invention is characterised.

An article by E. A. van Veen and J. C. Wortmann, International Journal of Production Research, Vol. 25, no. 1 pp 1645 - 1658, "Generic bills of material in assemble-to-order manufacturing", suggests the provision of mirrored predicate logic for expressing constraints between options (page 1654). However, no choice in the order of specification of options is disclosed or suggested.

### Summary of the Invention

According to the present invention there is provided a product assembly system comprising: a computer having display means, processing means and data input means; and assembly means controlling the assembly of the product;
the computer further having an options and linkages database, said database being adapted to store and having stored therein options data representing a plurality of optional components arranged in groups, each group comprising a plurality of related components of which any number from a pre-determined minimum to a pre-determined maximum may be selected, and linkage data identifying the availability for selection of the components in dependence on those components already selected, characterised by said linkage data comprising mirrored predicate logic in which logical connections are captured,
said processing means having an option screens interface means which, as necessary, modifies those groups of data from the options and linkages database which are transmitted to the display means for display as screens offering option choices as the string of optional components defining the product or its means of manufacture is evolved, the order of display of the display screens offering the options being at the choice of the user, the option screens interface means excluding from each display screen any options which are not compatible with the previously selected components,
and the processing means being adapted to transmit the string to the assembly means to complete assembly of the product.

Preferably, the computer has a parts and qualifiers database adapted to store and having stored therein parts data representing sub-components and qualifier data representing the requirements for such sub-components in each component, and the processing means is operatively controlled to identify for each selected component which sub-components are required and to output to the assembly means a specification in which the sub-component(s) for each component are set out.

Suitably the processing means incorporates an algorithmic engine and the options and linkages database and/or the parts and qualifiers database has stored therein data that may be arithmetically/logically manipulated by the algorithmic engine.

In the preferred embodiment the assembly means is a product assembly line, the product specification being used to control delivery of components and/or sub-components to the assembly line and assembly of the product from said components.

It will be appreciated that the components may be parts of a manufactured product such as a motor vehicle, or components (clauses) of an insurance policy or the like.

It follows from the above that a packaged program to handle options structure has a minimum four basic elements. First and foremost, it has an options-plus-linkages database (the OLDB), and directly associated with it the second element, which is the parts and qualifiers database (the PQDB). The third element is that of the option screens interface (the OSI), and the fourth element is that of an algorithmic engine (the AE) which performs any type of arithmetic and numeric manipulation/comparison required in an application.

A final element consists of various utilities, including editing, printing, screen formatting features, operating system linkers etc.

The relationship between the four major elements is critical to the efficiency of the system both in operation and in maintenance. Fundamentally the user interface, i.e. screens presented for options choice, is entirely generated from the options and linkage database. The reason for this is simple - any changes to the OLDB (a not infrequent occurrence in the initial attempts to capture a given option structure as well as being occasioned when options or linkages are changed) are likely to change either or both of the order of screen presentation or screen contents. Put another way, screen presentation is relatively arbitrary, the options linkage database is not. In a similar way, screens requiring data which have to be manipulated numerically or mathematically can have associated dedication of keys, that dedication being specific to screens. On the other hand, the parts database is independent of the options database, except that there is a one-to-one correspondence between the part qualifiers (though not if multiple qualifications are required) and the features (qualifications) which are presented as options. Integration of the main elements is achieved by various verification techniques and positive prompting if any editing change is not completed in the required detail.

Incorporated in the utilities element are facilities for adding permanent specific textual or other information, plus import/export facilities via ASCII files - in this way the options system can be embedded into other administrative systems.

### Example

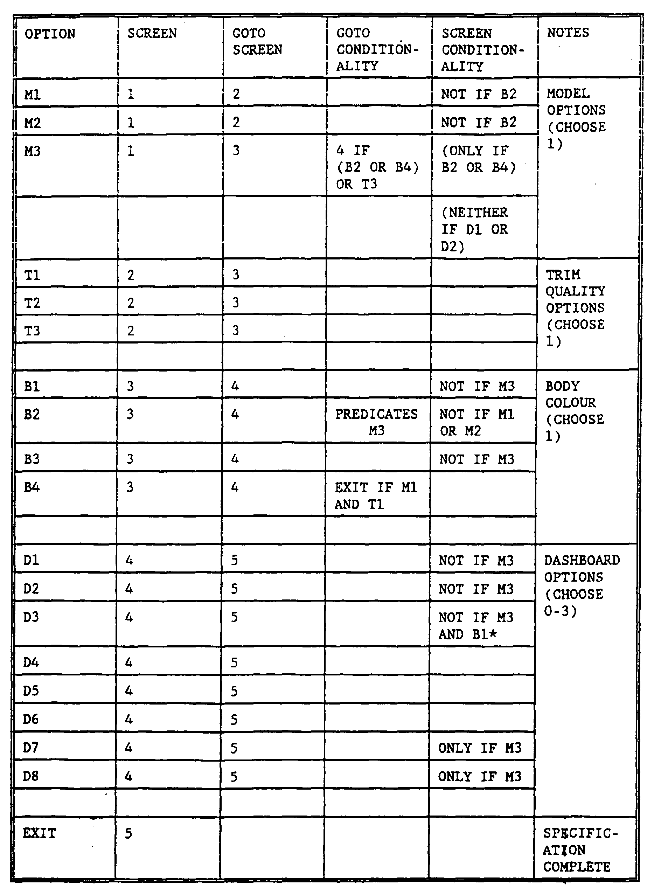

Reference is made to the Figure, which illustrates diagrammatically the database structure usable in one example of the product assembly system of the invention. The basic structure consists of a list (though shown as ordered by screen presentation number for convenience), and the essential fields of information are under the headings OPTION, SCREEN, GO TO SCREEN, GO TO CONDITIONALITY and SCREEN CONDITIONALITY for each OPTION item on that list.

Taking the first group of MODEL OPTIONS, it will be observed that there is a choice of one and one only of the three MODELS labelled M1 M2 M3 (there is no significance though perhaps convenience in this labelling M1 M2 M3). The choice pattern, in this case one and one only, is achieved by a familiar device or algorithm setting the maximum and minimum number of choices to be made on a screen when presented for choice, in this case MIN=MAX=1.

The whale group of M1 M2 M3 options is conveniently presented on a single screen (or screen continuation) and if for convenience this screen is presented first in choosing the various options which go to make up a specification, then the third field of information, the GO TO SCREEN, indicates the SCREEN which will be presented if a given choice is made. Thus if M1 is chosen, SCREEN 2 will be presented, likewise if M2 is chosen. However, if M3 is chosen, the example shown indicates that the next screen to be presented is SCREEN 3, and this caters for the possibility that a choice of MODEL M3 totally predicates the choice of the TRIM options T1 T2 T3. It is not necessary to indicate this in the options - linkages list or database, since M3 in this case is logically equivalent to M3 AND B3 (for example).

The fourth field of information GO TO CONDITIONALITY modifies the GO TO SCREEN field dynamically as the specification (string of options defining the specification) is evolved i.e. chosen. For example, the GO TO CONDITIONALITY field associated with BODY COLOUR B4, states that if M1 and T1 have already been chose, choice is no longer available in the group of options known as DASHBOARD OPTIONS which as a result of the choice of M1 AND T1 AND B4 has now become predetermined. The first advantage of the use of a GO TO CONDITIONALITY field is that multiple representation of options via their multiple representation on different screens can be totally obviated. In other words, options which can be arrived at as a result of different previous sub-specification paths need only been listed once in the options-linkage list. This has clear cut advantages both for updating and maintaining that list.

The second advantage of the GO TO CONDITIONALITY field is associated with the presence also of the fifth field SCREEN CONDITIONALITY. This fifth field by itself has advantages. The first advantage is that should a user wish to determine his options in a different order than that suggested in the original list i.e. MODEL followed by TRIM followed by BODY COLOUR followed by DASHBOARD OPTIONS (a different order of choice being made available by choosing from a list of option groups before beginning individual option selection), then those options which are not compatible with individual option choices as they are made will now not appear. In the example illustrated a choice of B2 by itself will predetermine M3, as would a choice of B4. This would in the illustrated example immediately lead to screen 4, having itself predetermined a choice of TRIM.

The second advantage of the SCREEN CONDITIONALITY field is well Illustrated by such entries as associated with D1, D2, D3, and D7 and D8. In these cases the actual composition of the subgroups can vary dynamically as choices evolve.

Examination of the illustrated Example shows internal self-checking of the captured predicate logic at work. For example the GO TO CONDITIONALITY field associated with M1 and M2 are mirrored in the GO TO CONDITIONALITY field of B2. A counter example is that of the GO TO CONDITIONALITY field of D3, asterisked*, which is not consistent with that of M3 and that of B1. In the case of complex rules and regulations, the detection of such inconsistencies is of great importance in the order that a specification can be completed without reference to authority external and higher than that associated with the specification system laid dawn.

It should be noted that both the go to conditionality and the screen conditionality fields can handle multiple conditionalities. It should further be noted that changes to screen composition may well force changes to the min-max choice parameters associated with that screen, and since this can be incorporated algorithmically, this adds additional power and flexibility to the representation, of complex logical relationships and choice.

## Claims

1. A product assembly system, comprising: a computer having display means, processing means and data input means; and assembly means controlling the assembly of the product;
the computer further having an options and linkages database, said database being adapted to store and having stored therein options data representing a plurality of optional components arranged in groups, each group comprising a plurality of related components of which any number from a predetermined minimum to a predetermined maximum may be selected, and linkage data identifying the availability for selection of the components in dependence on those components already selected, characterised by said linkage data comprising mirrored predicate logic in which logical connections are captured,
said processing means having an option screens interface means which, as necessary, modifies those groups of data from the options and linkages database which are transmitted to the display means for display as screens offering option choices as the string of optional components defining the product or its means of manufacture is evolved, the order of display of the display screens offering the options being at the choice of the user, the option screens interface means excluding from each display screen any options which are not compatible with the previously selected components,
and the processing means being adapted to transmit the string to the assembly means to complete assembly of the product.

2. A product assembly system as claimed in Claim 1 wherein the computer has a parts and qualifiers database adapted to store and having stored therein parts data representing sub-components and qualifier data representing the requirements for such sub-components in each component, and the processing means is operatively controlled to identify for each selected component which sub-components are required and to output to the assembly means a specification in which the sub-component(s) for each component are set out.

3. A product assembly system as claimed in Claim 1 or Claim 2, wherein the processing means incorporates an algorithmic engine and the options and linkages database and/or the parts and qualifiers database has stored therein data that may be arithmetically/logically manipulated by the algorithmic engine.

4. A product assembly system as claimed in any preceding Claim, wherein the assembly means is a product assembly line, the product specification being used to control delivery of components and/or sub-components to the assembly line and assembly of the product from said components.

## Patentansprüche

1. Produktmontagesystem, einschließlich: einem Computer mit einem Bildschirm, einer Verarbeitungsvorrichtung und Dateneingabevorrichtung; und einer Montagevorrichtung zur Kontrolle der Montage des Produkts;
wobei der Computer weiterhin eine Options- und Verknüpfungsdatenbank aufweist, die genannte Datenbank dazu adaptiert ist, Optionsdaten zu speichern und zu verwalten, die eine Vielzahl von in Gruppen angeordnete Optionsbauteile darstellen, wobei jede Gruppe eine Vielzahl von verwandten Bauteilen enthält von denen eine bestimmte Anzahl ab einem vorbestimmten Minimum bis zu einem vorbestimmten Maximum gewählt werden kann sowie Verknüpfüngsdaten, die die Verfügbarkeit zur Wahl der Bauteile abhängig von bereits gewählten Bauteilen identifiziert, dadurch gekennzeichnet, daß die genannten Verknüpfungsdaten eine spiegelgleiche Prädikatenlogik aufweisen, in der logische Verbindungen erfaßt werden,
die genannte Verarbeitungsvorrichtung eine Optionsbildschirm-Schnittstelle aufweist, die je nach Bedarf die Datengruppen von der Optionen- und Verknüpfungsdatenbank modifiziert, die an den Bildschirm zur Anzeige von Masken übertragen werden, die bei Entwicklung der Reihe von Optionsbauteilen, die das Produkt definieren oder dessen Herstellungsverfahrens Optionen anbieten, wobei der Anwender die Reihenfolge der die Optionen anbietenden Masken bestimmen kann und die Optionsmaskenschnittstelle von jeder Bildschirmmaske die Optionen ausblendet, die nicht mit den vorher gewählten Bauteilen kompatibel sind
und die Verarbeitungsvorrichtung dazu adaptiert ist, die Reihe zur Montagevorrichtung zu übertragen, um die Montage des Produkts zu vervollständigen.

2. Produktmontagesystem gemäß Anspruch 1, wobei der Computer eine Teile- und Qualifiziererdatenbank aufweist, die dazu adaptiert ist, Teiledaten die Unterbauteile darstellen und Qualifiziererdaten, die den Bedarf der genannten Unterbauteile in jedem Bauteil darstellen zu speichern und zu verwalten und die Verarbeitungsvorrichtung wirksam kontrolliert wird, um für jedes gewählte Bauteil festzustellen welche Unterbauteile benötigt werden und eine Spezifikation an die Montagevorrichtung auszugeben, in der das (die) Unterbauteil(e) für jedes Bauteil angegeben ist (sind).

3. Produktmontagesystem gemäß Anspruch 1 oder 2, wobei die Verarbeitungsvorrichtung eine algorithmische Maschine aufweist und die Optionen- und Verknüpfungsdatenbank und/oder die Teile- und Qualifiziererdatenbank Daten speichert, die arithmetisch/logisch von der algorithmischen Maschine manipuliert werden können.

4. Produktmontagesystem gemäß jedem der vorstehenden Ansprüche, wobei die Montagevorrichtung eine Produktfertigungsstraße ist und die Produktspezifikation dazu eingesetzt wird, die Lieferung von Bauteilen und/oder Unterbauteilen an die Fertigungsstraße und die Montage des Produktes von den genannten Bauteilen zu kontrollieren.

## Revendications

1. Système d'assemblage de produit comprenant : un ordinateur ayant un moyen d'affichage, un moyen de traitement et un moyen d'introduction de données ; et un moyen d'assemblage assurant le contrôle de l'assemblage du produit ;
l'ordinateur possédant, en outre, une base de données Options et Liens, ladite base de données étant adaptée de manière à enregistrer, et à y permettre l'enregistrement, de données Options représentant une pluralité de composants optionnels agencés en groupes, chaque groupe comprenant une pluralité de composants reliés entre eux dont il est possible de sélectionner n'importe quel nombre situé entre un nombre minimum prédéterminé et un nombre maximum préterminé, et des données Liens identifiant la disponibilité en vue de la sélection de composants tributaires de ceux des composants qui ont déjà fait l'objet d'une sélection, caractérisé par le fait que lesdites données Liens comprennent une logique de prédicats miroirs dans laquelle les liaisons logiques sont saisies,
ledit moyen de traitement possédant un moyen d'interface avec les écrans Options qui, en fonction des besoins, modifie ceux des groupes de données qui proviennent de la base de données Options et Liens qui sont transmis vers le moyen d'affichage afin d'être présentés en tant qu'écrans offrant des choix d'options, au fur et à mesure de l'élaboration de la chaîne des composants optionnels définissant le produit ou son moyen de fabrication, l'ordre d'affichage des écrans de visualisation offrant les options étant au choix de l'utilisateur, le moyen d'interface avec les écrans Options excluant de chaque écran de visualisation toute option qui ne serait pas compatible avec les composants sélectionnés précédemment,
et le moyen de traitement étant adapté de façon à transmettre la chaîne au moyen d'assemblage en vue de l'assemblage complet du produit.

2. Système d'assemblage de produit, selon la revendication 1, dans lequel l'ordinateur possède une base de données Pièces et Qualificatifs adaptée de manière à enregistrer, et à y permettre l'enregistrement, de données Pièces qui représentent les sous-composants ainsi que de données Qualificatifs qui représentent les exigences pour de tels sous-composants dans chaque composant, et le moyen de traitement est commandé de façon opératoire afin d'identifier pour chaque composant sélectionné ceux des sous-composants qui sont requis, et d'acheminer au moyen d'assemblage une spécification dans laquelle le(s) sous-composant(s) pour chaque composant ont été déterminés.

3. Système d'assemblage de produit, selon la revendication 1 ou selon la revendication 2, dans lequel le moyen de traitement incorpore un moteur algorithmique, alors que dans la base de données Options et Liens et/ou dans la base de données Pièces et Qualificatifs, on a enregistré des données susceptibles d'être manipulées arithmétiquement/logiquement par le moteur algorithmique.

4. Système d'assemblage de produit, selon l'une quelconque des revendications précédentes, dans lequel le moyen d'assemblage est une chaîne de montage de produits, la spécification du produit étant utilisée pour contrôler la livraison des composants et/ou des sous-composants au niveau de la chaîne de montage, et l'assemblage du produit à partir desdits composants.
